# FASCICULE DE BREVET EUROPEEN

(11) **EP 1 269 041 B1**
(45) Date de publication et mention de la délivrance du brevet: **15.12.2004**
(21) Numéro de dépôt: 02701370.5
(22) Date de dépôt: 01.02.2002
(51) Int. Cl.: F16F 15/139

(54) **DISPOSITIF DE TRANSMISSION DE COUPLE DU TYPE A DOUBLE VOLANT AMORTISSEUR**
DREHMOMENTÜBERTRAGUNGSVORRICHTUNG VOM TYP EINES ZWEIMASSENSCHWUNGRADES
DUAL DAMPING FLYWHEEL-TYPE TORQUE TRANSMISSION DEVICE

(30) Priorité: 02.02.2001 FR 0101409
(43) Date de publication de la demande: 02.01.2003
(73) Titulaire: VALEO EMBRAYAGES s.a.s., 80009 Amiens Cedex 1 (FR)
(72) Inventeur: BONFILIO, Ciriaco, F-92110 Clichy (FR); DHALLENE, Christophe, F-80800 Villers Bretonneux (FR); FENIOUX, Daniel, F-80480 Saleux (FR)
(74) Mandataire: Lemaire, Marc
(86) Numéro de dépôt international: PCT/FR2002/000382
(87) Numéro de publication internationale: WO 2002/063181

(56) Documents cités:
- US-A- 5 649 864
- US-A- 5 688 177

## Description

La présente invention concerne un dispositif de transmission de couple du type à double volant amortisseur, en particulier pour véhicule automobile.

Dans un tel dispositif, un volant primaire est fixé sur l'extrémité d'un arbre menant, tel que le vilebrequin d'un moteur à combustion interne, et est relié par un amortisseur de torsion à un volant secondaire relié lui-même par un embrayage à friction à un arbre mené tel que l'arbre d'entrée d'une boîte de vitesses. Les deux volants sont coaxiaux et le support et le centrage du volant secondaire sur le volant primaire sont assurés par un palier, monté entre un moyeu cylindrique d'un des volants et une portée cylindrique de l'autre volant.

Des moyens de frottement à serrage axial élastique sont montés entre les deux volants pour l'amortissement des vibrations de torsion et des débattements angulaires relatifs des deux volants, et des moyens de calage axial du volant secondaire sur le volant primaire sont prévus, qui comprennent en général un ou plusieurs circlips ou analogues lorsque le palier est un roulement à billes et au moins un circlips, une rondelle de serrage axial et éventuellement une rondelle d'application lorsque le palier est un palier lisse.

Ces moyens de frottement et de calage axial comprennent donc un nombre relativement important de pièces différentes, qu'il faut approvisionner, stocker, contrôler et monter de façon correcte lors de l'assemblage du double volant amortisseur, ce qui se traduit par une augmentation non négligeable du coût du dispositif précité.

Le document US-A- 5 688 177 décrit un dispositif d'absorption d'énergie selon le préambule de la revendication 1.

L'invention a notamment pour but de réduire ce nombre de pièces et de simplifier la fabrication et l'assemblage d'un dispositif de transmission de couple à double volant amortisseur, ainsi que de réduire son coût.

Elle propose à cet effet un dispositif de transmission de couple, en particulier pour véhicule automobile, comprenant un volant primaire entraîné en rotation par un arbre menant, un volant secondaire coaxial au volant primaire et monté à rotation sur celui-ci au moyen d'un palier, des moyens d'entraînement du volant secondaire en rotation par le volant primaire, des moyens de liaison en rotation du volant secondaire à un arbre mené, des moyens de frottement entre les volants primaire et secondaire, et des moyens de calage axial du volant secondaire par rapport au volant primaire, caractérisé en ce que les moyens de frottement et les moyens de calage axial comprennent une rondelle de frottement en appui sur un élément solidaire d'un des volants et une rondelle élastique de serrage appliquant axialement la rondelle de frottement sur ledit élément et venant en appui axial sur un épaulement annulaire d'un moyeu cylindrique de l'autre des volants, la rondelle de serrage et la rondelle de frottement étant solidaires en rotation de cet autre volant.

Ainsi, dans le dispositif selon l'invention, les moyens de frottement et de calage axial du volant secondaire sont combinés et formés de deux rondelles uniquement. Il en résulte une simplification de l'assemblage du dispositif selon l'invention et une réduction de son coût.

Selon une autre caractéristique de l'invention, la rondelle de serrage est montée par clipsage ou encliquetage élastique sur le moyeu cylindrique dudit autre volant.

A cet effet, la rondelle de serrage comprend avantageusement des pattes radiales engagées dans la gorge ou rainure circulaire précitée du moyeu cylindrique, ces pattes radiales étant de préférence incurvées ou coudées dans une direction opposée à la rondelle de frottement.

Pour faciliter le montage de cette rondelle sur le moyeu, ladite gorge ou rainure est raccordée à l'extrémité libre du moyeu cylindrique par une surface tronconique.

Selon encore une autre caractéristique de l'invention, la rondelle de frottement est immobilisée en rotation par la rondelle élastique.

Pour cela, la rondelle de frottement comprend avantageusement des pattes radiales engagées sur la rondelle élastique, par exemple entre les pattes radiales de cette rondelle élastique.

En variante, la rondelle de frottement peut comprendre au moins une patte radiale d'immobilisation en rotation, qui est engagée dans une rainure axiale du moyeu cylindrique précité.

Dans une variante de réalisation de l'invention, ce dispositif comprend au moins deux rondelles de frottement serrées entre ladite partie du palier et la rondelle de serrage, l'une de ces rondelles de frottement étant solidaire en rotation d'un des volants et l'autre de ces rondelles étant solidaire en rotation de l'autre volant.

On peut ainsi augmenter le frottement entre les deux volants et donc l'amortissement des vibrations absorbées par l'amortisseur de torsion.

Dans une première forme de réalisation de l'invention, le palier de support et de centrage du volant secondaire sur le volant primaire est un palier lisse, qui est solidaire du volant secondaire et qui comprend une partie centrale annulaire interposée entre le moyeu cylindrique du volant primaire et une portée cylindrique du volant secondaire, et deux ailes radiales dont l'une est interposée entre une face radiale du volant primaire et une face radiale du volant secondaire et dont l'autre est en contact avec la rondelle de frottement précitée.

Dans ce cas, le volant secondaire est en appui axial, par l'intermédiaire d'une aile radiale du palier lisse, sur un épaulement du volant primaire.

Dans une variante de réalisation, le palier lisse est formé de deux bagues à section en L, qui sont placées face à face d'un côté et de l'autre respectivement du volant secondaire.

Dans une autre variante de réalisation, la partie centrale annulaire et les ailes radiales du palier lisse sont des pièces différentes juxtaposées.

Dans une autre forme de réalisation, le palier précité est un roulement à billes dont une cage est solidaire en rotation du volant primaire et dont l'autre cage est solidaire en rotation du volant secondaire, la rondelle de frottement précitée étant appliquée sur l'une de ces cages.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique en coupe axiale d'un dispositif selon l'invention ;
- la figure 2 est une vue à plus grande échelle d'une partie de la figure 1 ;
- les figures 3 à 12 sont des vues correspondant à la figure 2 et représentent des variantes de réalisation de l'invention.

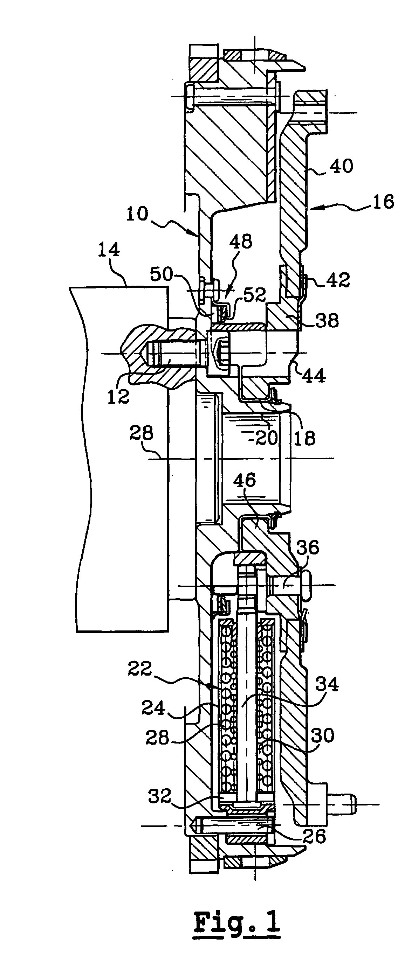

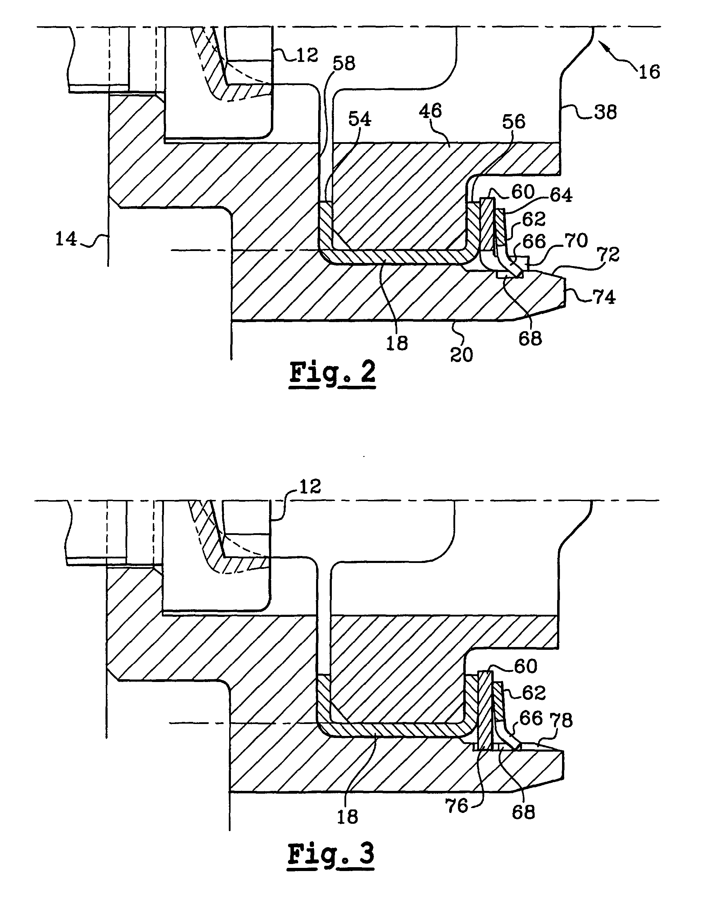

On se réfère d'abord aux figures 1 et 2 qui représentent schématiquement un premier mode de réalisation d'un dispositif de transmission de couple selon l'invention, ce dispositif comprenant un volant primaire 10 fixé par des vis 12 en bout d'un arbre menant 14 tel que le vilebrequin d'un moteur à combustion interne, et un volant secondaire 16 qui est supporté et centré au moyen d'un palier 18 sur un moyeu cylindrique 20 du volant primaire 10.

Un amortisseur de torsion 22 du type radial est monté entre les volants 10 et 16 et les relie en rotation avec une possibilité de débattement angulaire relatif. D'une façon bien connue de l'homme du métier, l'amortisseur de torsion 22 comprend des boîtes ou cassettes 24 dont les extrémités radialement externes sont montées à rotation sur le volant primaire 10 autour d'axes 26 parallèles à l'axe commun 28 de rotation des volants 10 et 16, et qui contiennent des ressorts de compression hélicoïdaux 28, 30, dont les extrémités radialement internes sont en appui sur les extrémités radialement internes des boîtes 24 et dont les extrémités radialement externes sont en appui sur une rondelle 32 portée par des tiges radiales 34 qui s'étendent radialement à l'intérieur des boîtes 24 et traversent leur fond, les extrémités radialement internes des tiges 34 étant montées à rotation sur le volant secondaire 16 autour des axes 36 parallèles à l'axe de rotation 28.

En variante, l'amortisseur de torsion comprend des ressorts circonférentiels courbes ou des ressorts tangentiels droits.

Le volant secondaire 16 est formé de deux parties annulaires coaxiales 38, 40 reliées par un limiteur de couple 42, la partie radialement interne 38 comportant des trous 44 qui sont alignés avec les vis 12 de fixation du volant primaire 10 sur l'arbre menant 14 et qui permettent le passage de ces vis et/ou leur actionnement pour leur vissage ou leur dévissage, cette partie 38 comportant un rebord annulaire radialement interne 46 formant une portée cylindrique de montage sur le moyeu cylindrique 20 du volant primaire 10 par l'intermédiaire du palier 18. La partie radialement externe 40 du volant secondaire forme le plateau de réaction d'un embrayage à friction (non représenté) permettant de relier le dispositif selon l'invention à un arbre mené tel que l'arbre d'entrée d'une boîte de vitesses.

Des moyens de friction 48 sont agencés entre le volant primaire 10 et le volant secondaire 16, et comprennent par exemple une rondelle de frottement 50 sollicitée axialement sur une face radiale du volant primaire 10 par une rondelle élastique 52 et entraînée en rotation par le volant secondaire 16 dès que le débattement angulaire entre les volants 10 et 16 dépasse une valeur prédéterminée.

Dans l'exemple de réalisation de la figure 1, le palier 18, qui se trouve radialement à l'intérieur des vis de fixation 12, est un palier lisse de forme annulaire à section en U dont la concavité est tournée vers l'extérieur et qui est monté serré sur le rebord annulaire interne 46 du volant secondaire 16.

Le palier 18 est en une seule pièce et comprend à ses extrémités axiales deux ailes radiales 54, 56 qui sont serrées sur les faces radiales du rebord annulaire 46 du volant secondaire, l'aile radiale 54 située du côté de l'arbre menant 14 étant appliquée sur un épaulement 58 du volant primaire. Une rondelle de frottement 60 portée par le moyeu cylindrique 20 du volant primaire est appliquée sur l'autre aile radiale 56 du palier lisse 18 et est sollicitée axialement en appui sur cette aile 56 par une rondelle élastique de serrage 62 portée également par le moyeu cylindrique 20 du volant primaire.

Comme on le voit bien en figure 2, la rondelle élastique de serrage 62 comporte une partie annulaire radialement externe 64, formant rondelle Belleville, en appui sur la rondelle de frottement 60, et des pattes radiales 66 qui s'étendent vers l'axe de rotation depuis la partie annulaire 64 et qui sont engagées dans une rainure ou gorge circulaire 68 de la surface périphérique externe du moyeu 20, ces pattes 66 étant de préférence incurvées ou coudées dans la direction opposée à la rondelle de frottement 60 et au palier 18 pour venir prendre appui sur le bord arrière de la gorge ou rainure annulaire 68.

La rondelle de frottement 60 comprend également, à sa partie radialement interne, des pattes radiales 70 qui sont pliées ou coudées du côté opposé au palier 18 et qui sont engagées entre les pattes radiales 66 de la rondelle de serrage 62, de sorte que la rondelle de frottement 60 est solidaire en rotation de la rondelle de serrage 62 et du moyeu cylindrique 20 du volant primaire.

En fonctionnement, tout débattement angulaire entre les volants primaire et secondaire se traduit par un frottement de la rondelle 60 sur l'aile radiale 56 du palier 18 solidaire du volant secondaire 16.

De plus, ce montage assure le calage axial du volant secondaire 16 sur le volant primaire 10, la poussée axiale développée par la rondelle 62 sollicitant le rebord interne 46 du volant secondaire en appui sur l'épaulement 58 du volant primaire par l'intermédiaire de l'aile radiale 54 du palier 18.

De préférence, la surface périphérique externe 72 du moyeu 20, qui relie la gorge 68 à la face d'extrémité arrière 74 du moyeu 20 est tronconique, ce qui facilite le montage de la rondelle de serrage 62 sur le moyeu 20 par poussée axiale, les pattes radiales 66 de cette rondelle étant déformées élastiquement vers l'extérieur au passage sur la surface tronconique 72, puis venant s'engager dans la rainure 68 par détente élastique en prenant appui sur le bord arrière de cette rainure.

Ce montage de la rondelle de serrage 62 par encliquetage élastique est plus simple et moins coûteux que les moyens prévus à cet effet dans la technique antérieure.

Dans la variante de réalisation de la figure 3, on retrouve les mêmes éléments qu'en figure 2, la différence étant que la rondelle de frottement 60 est solidarisée en rotation avec le moyeu cylindrique 20 du volant primaire grâce à au moins une patte radiale 76 engagée dans une rainure axiale 78 de la surface périphérique externe du moyeu 20.

Pour le reste, la structure est identique à celle déjà décrite en référence aux figures 1 et 2.

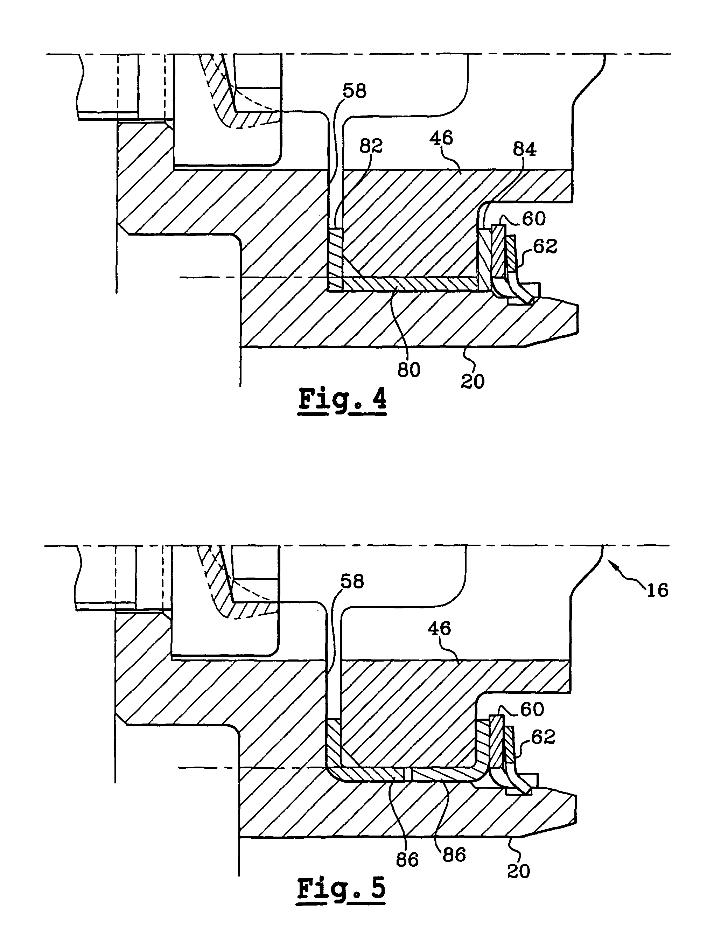

Dans la variante de réalisation de la figure 4, la rondelle de frottement 60 et la rondelle de serrage 62 sont identiques à celles représentées en figure 2, mais le palier cylindrique 18 est formé de trois pièces juxtaposées, comprenant une bague cylindrique 80 interposée entre le rebord annulaire interne 46 du volant secondaire et le moyeu cylindrique 20 du volant primaire, et deux rondelles 82 et 84, dont l'une est interposée entre le rebord annulaire interne 46 du volant secondaire et l'épaulement 58 du volant primaire et dont l'autre est interposée entre ce rebord annulaire interne 46 et la rondelle de frottement 60. Pour le reste, la structure et le fonctionnement sont identiques à ceux déjà décrits.

Dans la variante de réalisation de la figure 5, on retrouve la rondelle de frottement 60 et la rondelle de serrage 62 de la figure 2, mais le palier lisse 18 est formé de deux bagues annulaires 86 identiques à section en L qui sont montées face à face de part et d'autre respectivement du rebord annulaire interne 46 du volant secondaire 16. Chaque bague 86 comprend une partie cylindrique interposée entre le rebord 46 du volant secondaire et le moyeu cylindrique 20 du volant primaire et une aile radiale interposée entre ce rebord 46 et l'épaulement 58 du volant primaire pour l'une des bagues, et entre le rebord 46 et la rondelle de frottement 60 pour l'autre bague.

Comme représenté en figure 5, un intervalle peut subsister entre les parties cylindriques des deux bagues 86.

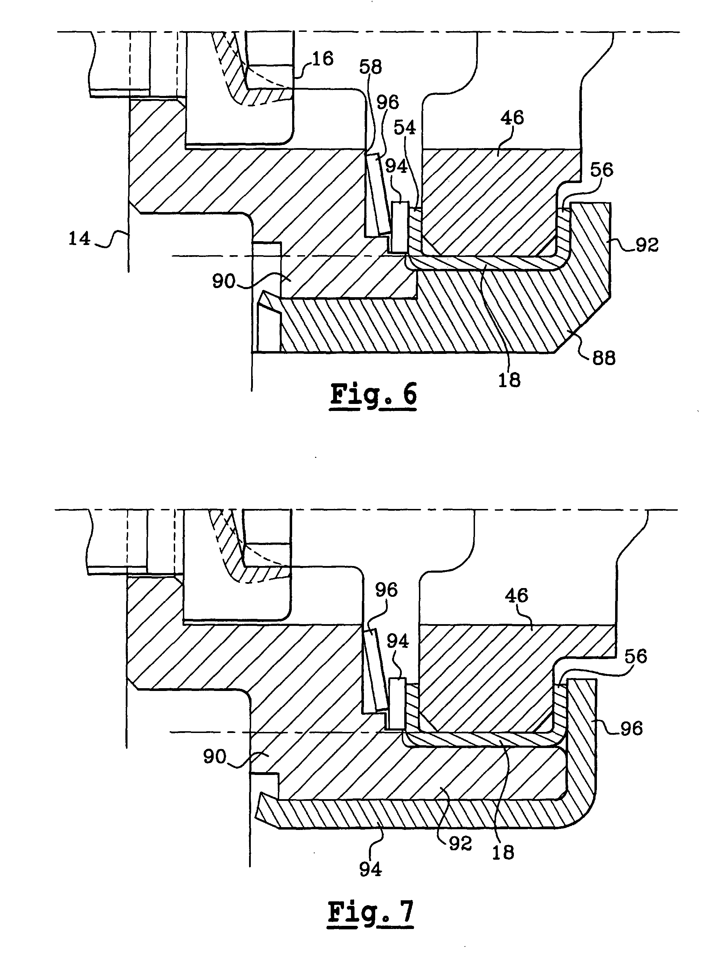

Dans la variante de réalisation de la figure 6, le palier cylindrique 18 est du même type que celui représenté en figure 2, mais il est monté serré sur le rebord annulaire interne 46 du volant secondaire et interposé entre ce rebord et une pièce annulaire 88 qui est rapportée sur le volant primaire 10 et qui est fixée sur ce dernier par sertissage par exemple, cette pièce annulaire 88 jouant le rôle du moyeu cylindrique 20 formé par le volant primaire dans les modes de réalisation précédents.

Cette pièce annulaire 88 est fixée sur un rebord annulaire interne 90 du volant primaire, situé entre le rebord annulaire interne 46 du volant secondaire et l'arbre menant 14. Du côté opposé à l'arbre menant 14, la pièce annulaire 88 comporte une aile radiale 92 orientée vers l'extérieur et s'appliquant axialement sur l'aile radiale 56 du palier 18. De l'autre côté, l'aile radiale 54 du palier 18 est en contact avec une rondelle de frottement 94 sollicitée axialement par une rondelle de serrage 96, telle qu'une rondelle Belleville, montée entre la rondelle de frottement 94 et l'épaulement 58 précité du volant primaire.

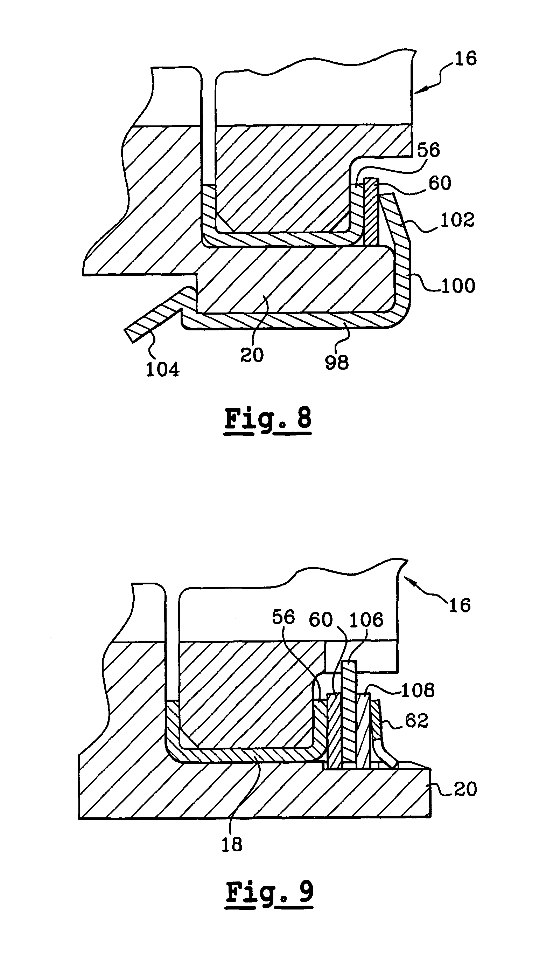

Dans la variante de réalisation de la figure 7, le montage est sensiblement le même qu'en figure 6, mais le rebord annulaire interne 90 du volant primaire est prolongé axialement du côté opposé à l'arbre menant par un moyeu cylindrique 92 de support et de centrage du rebord annulaire interne 46 du palier secondaire 16 au moyen d'un palier lisse 18 du type représenté en figure 2. Une pièce annulaire 94 est montée à l'intérieur du moyeu cylindrique 92 et est fixée sur celui-ci par sertissage, cette pièce annulaire 94 comprenant une aile radiale 96 orientée vers l'extérieur pour un calage axial du volant secondaire par l'intermédiaire de l'aile radiale 56 du palier 18. Pour le reste, on retrouve la rondelle de frottement 94 et la rondelle de serrage 96 montées de la même façon que décrit en référence à la figure 6.

Les variantes de réalisation des figures 6 et 7 sont bien adaptées à un embrayage du type tiré.

Dans la variante de réalisation de la figure 8, on retrouve une disposition semblable à celle décrite en référence à la figure 2, mais la rondelle de frottement 60 est appliquée sur l'aile radiale 56 du palier lisse 18 par une pièce annulaire 98 qui est montée radialement à l'intérieur du moyeu cylindrique 20 du volant primaire par encliquetage élastique et qui comporte une aile radiale 100 orientée vers l'extérieur et se terminant par des pattes obliques 102 pour la sollicitation axiale de la rondelle de frottement 60 sur l'aile radiale 56 du palier lisse. Du côté opposé, la pièce annulaire 98 comporte des pattes 104 d'encliquetage élastique sur un épaulement de la surface interne du moyeu cylindrique 20.

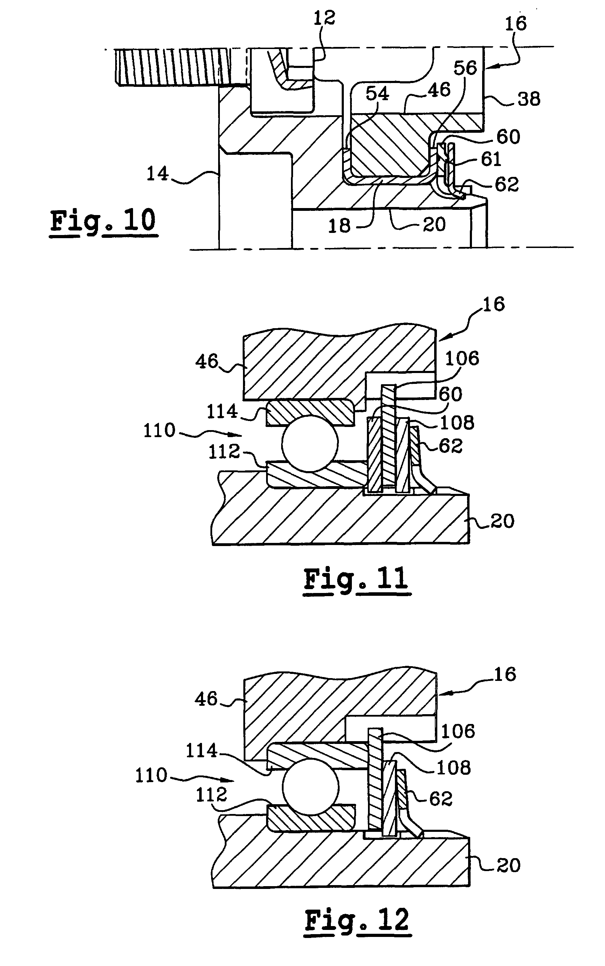

Dans la variante de réalisation de la figure 9, le dispositif est du même type que celui représenté en figure 3, mais les moyens de frottement comprennent plusieurs rondelles de frottement juxtaposées et serrées entre l'aile radiale 56 du palier lisse 18 et la rondelle de serrage 62.

Les rondelles de frottement sont ici au nombre de trois : une rondelle 60 est en appui sur l'aile radiale 56 du palier 18 et est solidaire en rotation du moyeu cylindrique 20 du volant primaire, une autre rondelle de frottement 106 est en appui sur la rondelle 60 et est entraînée en rotation par le volant secondaire 16 et la troisième rondelle 108 est serrée entre la deuxième rondelle 106 et la rondelle de serrage 62, et est solidaire en rotation du moyeu cylindrique 20 du volant primaire. La deuxième rondelle 106 est liée en rotation au volant secondaire 16 par exemple au moyen de pattes radiales formées à sa périphérie externe et engagées dans des rainures axiales de la surface cylindrique interne de la partie correspondante du volant secondaire 16.

Dans la variante de réalisation de la figure 10, on retrouve une disposition semblable à celle de la figure 2, mais la rondelle de frottement 60 comporte un bossage sur sa face tournée vers la rondelle de serrage 62, ce bossage étant discontinu ou continu et formé par exemple par une nervure circulaire 61. La partie de rondelle Belleville de la rondelle de serrage 62 qui s'appuie sur ce bossage de façon sensiblement uniforme, a un rayon d'appui bien défini sur la rondelle de frottement 60 et exerce donc sur celle-ci une force bien définie. Comme le bossage 61 est formé sensiblement au milieu de la rondelle 60, la pression de cette rondelle sur l'aile 56 du palier lisse 18 est répartie de façon uniforme. Pour le reste, la description faite en référence à la figure 2 s'applique aussi à la figure 10.

Dans la variante de réalisation de la figure 11, on retrouve les trois rondelles de frottement 60, 106, 108 précitées, mais le palier lisse 18 est remplacé par un roulement à billes 110 dont la cage interne 112 est montée fixe en rotation sur le moyeu cylindrique 20 du volant primaire, et dont la cage externe 114 est fixe en rotation sur le rebord annulaire interne 46 du volant secondaire 16. La cage interne 112 est en appui sur un épaulement du moyeu cylindrique 20 du côté de l'arbre menant 14, tandis que la cage externe du roulement est en appui sur un épaulement du rebord interne 46, du côté opposé à l'arbre menant. La rondelle de frottement 60 est en appui sur la cage interne 112 du roulement 118 et est solidaire en rotation du moyeu cylindrique 20, une deuxième rondelle 106 est solidaire en rotation du volant secondaire 16 et est serrée entre les rondelles 60 et 108, et la troisième rondelle 108 est solidaire en rotation du moyeu cylindrique 20 et est appliquée sur la deuxième rondelle 106 par la rondelle de serrage 62.

Dans la variante de réalisation représentée en figure 12, on retrouve sensiblement le même montage qu'en figure 10, mais les rondelles de frottement sont au nombre de deux, la rondelle 106 liée en rotation au volant secondaire 16 étant appliquée sur la cage externe 114 du roulement et maintenant cette cage en appui sur un épaulement du rebord interne 46 du volant secondaire; du côté de l'arbre menant, la rondelle 108 étant appliquée par la rondelle de serrage 62 sur la rondelle de frottement 106 et étant liée en rotation au moyeu cylindrique 20 du volant primaire.

Dans une variante de réalisation on retrouve le montage de la figure 2, mais l'aile radiale 56 du palier 18 est supprimée et la rondelle de frottement 60 est appliquée sur la face radiale du rebord 46 du volant secondaire.

Une autre variante de réalisation reprend la variante de réalisation précédente, avec suppression de la rondelle de frottement 60. La rondelle de serrage 62 est de forme incurvée convexe du côté de la face radiale du rebord 46 du volant secondaire et s'appuie sur cette face radiale, pour former la rondelle de frottement précitée. Un avantage de ces deux variantes de réalisation est que le montage du palier 18 sur le rebord 46 du volant secondaire est réalisé par un seul emmanchement, sans autre opération, et est donc très simple.

## Revendications

1. Dispositif de transmission de couple, en particulier pour véhicule automobile, comprenant un volant primaire (10) entraîné en rotation par un arbre menant, un volant secondaire (16) coaxial au volant primaire et monté à rotation sur celui-ci au moyen d'un palier (18, 110), des moyens d'entraînement du volant secondaire (16) en rotation par le volant primaire (10), des moyens de liaison en rotation du volant secondaire à un arbre mené, des moyens de frottement entre les volants primaire et secondaire, et des moyens de calage axial du volant secondaire par rapport au volant primaire, **caractérisé en ce que** les moyens de frottement et les moyens de calage axial comprennent une rondelle de frottement (60, 106, 108) en appui sur un élément (56, 112, 114) solidaire d'un des volants et une rondelle élastique de serrage (62) appliquant axialement la rondelle de frottement sur ledit élément (56, 112, 114) et venant en appui axial sur un épaulement annulaire (68) d'un moyeu cylindrique (20) de l'autre des volants, la rondelle de serrage (62) et la rondelle de frottement (60, 108) étant solidaires en rotation de cet autre volant.

2. Dispositif selon la revendication 1, **caractérisé en ce que** la rondelle de serrage (62) est montée par clipsage ou encliquetage élastique sur le moyeu cylindrique (20) dudit autre volant.

3. Dispositif selon la revendication 1 à 2, **caractérisé en ce que** la rondelle de serrage (62) comprend des pattes radiales (66) engagées dans la gorge ou rainure circulaire (68) du moyeu cylindrique (20).

4. Dispositif selon la revendication 3, **caractérisé en ce que** les pattes (66) de la rondelle de serrage (62) sont incurvées ou coudées dans la direction opposée à la rondelle de frottement (60).

5. Dispositif selon l'une quelconque des revendications précédentes, **caractérisé en ce que** la gorge ou rainure circulaire (68) d'appui de la rondelle de serrage (62) est raccordée à une extrémité libre (74) du moyeu cylindrique (20) par une surface tronconique (72) pour faciliter le montage de la rondelle de serrage (62).

6. Dispositif selon l'une quelconque des revendications précédentes, **caractérisé en ce que** la rondelle de frottement (60) est immobilisée en rotation par la rondelle de serrage (62).

7. Dispositif selon l'une des revendications 1 à 6, **caractérisé en ce que** la rondelle de frottement (60) comprend des pattes radiales (70) engagées sur la rondelle de serrage (62).

8. Dispositif selon la revendication 7, **caractérisé en ce que** les pattes (70) de la rondelle de frottement (60) sont engagées entre les pattes (66) de la rondelle de serrage (62).

9. Dispositif selon l'une des revendications 1 à 5, **caractérisé en ce que** la rondelle de frottement (60) comprend au moins une patte radiale (76) engagée dans une rainure axiale (78) du moyeu cylindrique (20) pour être liée en rotation à ce moyeu.

10. Dispositif selon l'une quelconque des revendications 1 à 9, **caractérisé en ce que** la rondelle de frottement (60) comprend, sur sa face tournée vers la rondelle de serrage (62), un bossage formé par exemple par une nervure circulaire (61) et sur lequel s'appuie la rondelle de serrage (62).

11. Dispositif selon l'une quelconque des revendications précédentes, **caractérisé en ce qu'**il comprend au moins deux rondelles de frottement (60, 106, 108) serrées entre ledit élément (56) solidaire d'un volant et ladite rondelle de serrage (62), l'une de ces rondelles de frottement étant solidaire en rotation d'un des volants et l'autre rondelle étant solidaire en rotation de l'autre volant.

12. Dispositif selon l'une quelconque des revendications précédentes, **caractérisé en ce que** le palier (18) est un palier lisse.

13. Dispositif selon la revendication 12, **caractérisé en ce que** le palier lisse est solidaire du volant secondaire (16) et comprend une partie centrale cylindrique interposée entre le moyeu cylindrique (20) du volant primaire et une portée cylindrique (46) du volant secondaire et deux ailes radiales (54, 56) dont l'une est interposée entre une face radiale (58) du volant primaire et une face radiale du volant secondaire et dont l'autre est en contact avec la rondelle de frottement (60) précitée.

14. Dispositif selon la revendication 13, **caractérisé en ce que** le volant secondaire (16) est en appui axial, par l'intermédiaire d'une aile radiale (54) du palier lisse (18), sur un épaulement (58) du volant primaire.

15. Dispositif selon l'une quelconque des revendications précédentes, **caractérisé en ce que** le moyeu cylindrique du volant primaire est formé par une pièce annulaire cylindrique (88) rapportée et fixée, par exemple par sertissage, sur le volant primaire.

16. Dispositif selon l'une des revendications 1 à 14, **caractérisé en ce que** la rondelle de serrage précitée est formée par des pattes obliques (102) d'une aile radiale (100) d'une pièce annulaire cylindrique (98) rapportée et fixée, par exemple par encliquetage élastique, sur le moyeu cylindrique (20) du volant primaire.

17. Dispositif selon l'une des revendications 13 à 16, **caractérisé en ce que** le palier lisse est formé de deux bagues (86) à section en L, placées face à face d'un côté et de l'autre respectivement du volant secondaire.

18. Dispositif selon l'une des revendications 13 à 16, **caractérisé en ce que** la partie centrale cylindrique (81) et les ailes radiales (82, 84) du palier lisse sont des pièces différentes juxtaposées.

19. Dispositif selon l'une des revendications 1 à 11, **caractérisé en ce que** le palier est un roulement à billes (110) dont une cage (112) est solidaire en rotation du volant primaire et dont l'autre cage est solidaire en rotation du volant secondaire, la rondelle de frottement (60) précitée étant appliquée sur l'une de ces cages.

20. Dispositif selon l'une des revendications 1 à 12, **caractérisé en ce que** la rondelle de frottement (60) est appliquée sur une face radiale du volant secondaire (16).

21. Dispositif selon l'une des revendications 1 à 5, **caractérisé en ce que** la rondelle de serrage (62) est appliquée sur une face radiale du volant secondaire (16) et forme la rondelle de frottement précitée.

## Claims

1. Torque transmission device, in particular for a motor vehicle, comprising a primary flywheel (10) driven in rotation by a driving shaft, a secondary flywheel (16) coaxial with the primary flywheel and mounted for rotation thereon by means of a bearing (18, 110), means of driving the secondary flywheel (16) in rotation by means of the primary flywheel (10), means of rotationally connecting the secondary flywheel to a driven shaft, friction means between the primary and secondary flywheels, and means for the axial fixing of the secondary flywheel with respect to the primary flywheel, **characterised in that** the friction means and the axial fixing means comprise a friction washer (60, 106, 108) in abutment on an element (56, 112, 114) fixed to one of the flywheels and an elastic clamping washer (62) axially applying the friction washer to the said element (56, 112, 114) and coming into axial abutment on an annular shoulder (68) on a cylindrical hub (20) on the other one of the flywheels, the clamping washer (62) and the friction washer (60, 108) being rotationally fixed to this other flywheel.

2. Device according to Claim 1, **characterised in that** the clamping washer (62) is mounted on the cylindrical hub (20) of the said other flywheel by clipping or elastic snapping on.

3. Device according to Claim 1 to 2, **characterised in that** the clamping washer (62) comprises radial lugs (66) engaged in the circular groove or recess (68) in the cylindrical hub (20).

4. Device according to Claim 3, **characterised in that** the lugs (66) on the clamping washer (62) are curved or angled in the opposite direction to the friction washer (60).

5. Device according to any one of the preceding claims, **characterised in that** the circular abutment groove or recess (68) for the clamping washer (62) is connected to a free end (74) of the cylindrical hub (20) by a frustoconical surface (72) in order to facilitate the mounting of the clamping washer (62).

6. Device according to any one of the preceding claims, **characterised in that** the friction washer (60) is rotationally immobilised by the clamping washer (62).

7. Device according to one of Claims 1 to 6, **characterised in that** the friction washer (60) comprises radial lugs (70) engaged on the clamping washer (62).

8. Device according to Claim 7, **characterised in that** the lugs (70) on the friction washer (60) are engaged between the lugs (66) on the clamping washer (72).

9. Device according to one of Claims 1 to 5, **characterised in that** the friction washer (60) comprises at least one radial lug (76) engaged in an axial groove (78) in the cylindrical hub (20) in order to be rotationally connected to this hub.

10. Device according to any one of Claims 1 to 9, **characterised in that** the friction washer (60) comprises, on its face turned towards the clamping washer (62) a protrusion formed for example by a circular rib (61) and on which the clamping washer (62) bears.

11. Device according to any one of the preceding claims, **characterised in that** it comprises at least two friction washers (60, 106, 108) clamped between the said element (56) fixed to a flywheel and the said clamping washer (62), the other one of these friction washers being rotationally fixed to one of the flywheels and the other washer being rotationally fixed to the other flywheel.

12. Device according to any one of the preceding claims, **characterised in that** the bearing (18) is a plain bearing.

13. Device according to Claim 12, **characterised in that** the plain bearing is fixed to the secondary flywheel (16) and comprises a cylindrical central part interposed between the cylindrical hub (20) of the primary flywheel and a cylindrical surface (46) on the secondary flywheel and two radial wings (54, 56), one of which is interposed between a radial face (58) of the primary flywheel and a radial face of the secondary flywheel and the other one of which is in contact with the aforementioned friction washer (60).

14. Device according to Claim 13, **characterised in that** the secondary flywheel (16) is in axial abutment, by means of a radial wing (54) of the plain bearing (18), on a shoulder (58) on the primary flywheel.

15. Device according to any one of the preceding claims, **characterised in that** the cylindrical hub of the primary flywheel is formed by a cylindrical annular piece (88) attached and fixed, for example by crimping, to the primary flywheel.

16. Device according to one of Claims 1 to 14, **characterised in that** the aforementioned clamping washer is formed by oblique lugs (102) on a radial wing (100) of a cylindrical annular piece (98) attached and fixed, for example by elastic snapping on, to the cylindrical hub (20) of the primary flywheel.

17. Device according to one of Claims 13 to 16, **characterised in that** the plain bearing is formed by two races (86) with an L-shaped cross-section, placed face to face on each side respectively of the secondary flywheel.

18. Device according to one of Claims 13 to 16, **characterised in that** the cylindrical central part (81) and the radial wings (82, 84) of the plain bearing are different juxtaposed pieces.

19. Device according to one of Claims 1 to 11, **characterised in that** the bearing is a ball bearing (110), a cage (112) of which is rotationally fixed to the primary flywheel and the other cage of which is rotationally fixed to the secondary flywheel, the aforementioned friction washer (60) being applied to one of these cages.

20. Device according to one of Claims 1 to 12, **characterised in that** the friction washer (60) is applied to a radial face of the secondary flywheel (16).

21. Device according to one of Claims 1 to 5, **characterised in that** the clamping washer (62) is applied to a radial face of the secondary flywheel (16) and forms the aforementioned friction washer.

## Patentansprüche

1. Vorrichtung zur Drehmomentübertragung, insbesondere für Kraftfahrzeuge, umfassend ein durch eine treibende Welle drehend angetriebenes Primärschwungrad (10), ein mit dem Primärschwungrad koaxiales Sekundärschwungrad (16), das mittels eines Lagers (18, 110) drehbar an diesem gelagert ist, Mittel zum drehenden Antrieb des Sekundärschwungrads (16) durch das Primärschwungrad (10), Mittel zur drehfesten Verbindung des Sekundärschwungrads (16) mit einer getriebenen Welle, Reibungsmittel zwischen dem Primär- und dem Sekundärschwungrad und Mittel zur axialen Sicherung des Sekundärschwungrads im Verhältnis zum Primärschwungrad, **dadurch gekennzeichnet, daß** die Reibungsmittel und die axialen Sicherungsmittel eine Reibscheibe (60, 106, 108) in Anlage an einem fest mit einem der Schwungräder verbundenen Element (56, 112, 114) und eine Einspannfederscheibe (62) umfassen, die die Reibscheibe axial an das besagte Element (56, 112, 114) andrückt und an einer ringförmigen Schulter (68) einer zylindrischen Nabe (20) des anderen der Schwungräder zur axialen Anlage kommt, wobei die Einspannscheibe (62) und die Reibscheibe (60, 108) drehfest mit diesem anderen Schwungrad verbunden sind.

2. Vorrichtung nach Anspruch 1, **dadurch gekennzeichnet, daß** die Einspannscheibe (62) durch Aufklippsen oder elastisches Einrasten an der zylindrischen Nabe (20) des besagten anderen Schwungrads eingesetzt ist.

3. Vorrichtung nach Anspruch 1 bis 2, **dadurch gekennzeichnet, daß** die Einspannscheibe (62) radiale Ansätze (66) umfaßt, die in die kreisförmige Ausnehmung oder Nut (68) der zylindrischen Nabe (20) eingesetzt sind.

4. Vorrichtung nach Anspruch 3, **dadurch gekennzeichnet, dass** die Ansätze (66) der Einspannscheibe (62) in der zur Reibscheibe (60) entgegengesetzten Richtung gekrümmt oder abgewinkelt sind.

5. Vorrichtung nach einem der vorangehenden Ansprüche, **dadurch gekennzeichnet , daß** sich die kreisförmige Anlageauskehlung oder Anlagenut (68) durch eine kegelstumpfartige Fläche (72) an ein freies Ende (74) der zylindrischen Nabe (20) anschließt, um den Einbau der Einspannscheibe (62) zu vereinfachen.

6. Vorrichtung nach einem der vorangehenden Ansprüche, **dadurch gekennzeichnet, daß** die Reibscheibe (60) durch die Einspannscheibe (62) gegen Verdrehung gesichert ist.

7. Vorrichtung nach einem der Ansprüche 1 bis 6, **dadurch gekennzeichnet, daß** die Reibscheibe (60) an der Einspannscheibe (62) eingesetzte radiale Ansätze (70) umfaßt.

8. Vorrichtung nach Anspruch 7, **dadurch gekennzeichnet, daß** die Ansätze (70) der Reibscheibe (60) zwischen den Ansätzen (66) der Einspannscheibe (62) eingesetzt sind.

9. Vorrichtung nach einem der Ansprüche 1 bis 5, **dadurch gekennzeichnet, daß** die Reibscheibe (60) wenigstens einen radialen Ansatz (76) umfaßt, der in eine axiale Nut (78) der zylindrischen Nabe (20) eingesetzt ist, um drehfest mit dieser Nabe verbunden zu werden.

10. Vorrichtung nach einem der Ansprüche 1 bis 9, **dadurch gekennzeichnet, daß** die Reibscheibe (60) auf ihrer zur Einspannscheibe (62) gerichteten Fläche einen Vorsprung aufweist, der beispielsweise durch eine kreisförmige Rippe (61) gebildet wird und an dem die Einspannscheibe (62) anliegt.

11. Vorrichtung nach einem der vorangehenden Ansprüche, **dadurch gekennzeichnet, daß** sie wenigstens zwei Reibscheiben (60, 106, 108) umfasst, die zwischen dem besagten fest mit einem Schwungrad verbundenen Element (56) und der besagten Einspannscheibe (62) eingespannt sind, wobei eine dieser Reibscheiben drehfest mit einem der Schwungräder und die andere Reibscheibe drehfest mit dem anderen Schwungrad verbunden ist.

12. Vorrichtung nach einem der vorangehenden Ansprüche, **dadurch gekennzeichnet, daß** das Lager (18) ein Gleitlager ist.

13. Vorrichtung nach Anspruch 12, **dadurch gekennzeichnet, daß** das Gleitlager fest mit dem Sekundärschwungrad (16) verbunden ist und einen zwischen der zylindrischen Nabe (20) des Primärschwungrads und einer zylindrischen Lagerfläche (46) des Sekundärschwungrads eingefügten zylindrischen Mittelteil und zwei radiale Schenkel (54, 56) umfaßt, von denen einer zwischen einer radialen Fläche (58) des Primärschwungrads und einer radialen Fläche des Sekundärschwungrads eingefügt ist, während sich der andere mit der vorgenannten Reibscheibe (60) in Kontakt befindet.

14. Vorrichtung nach Anspruch 13, **dadurch gekennzeichnet, daß** sich das Sekundärschwungrad (16) über einen radialen Schenkel (54) des Gleitlagers (18) in axialer Anlage an einer Schulter (58) des Primärschwungrads befindet.

15. Vorrichtung nach einem der vorangehenden Ansprüche, **dadurch gekennzeichnet, daß** die zylindrische Nabe des Primärschwungrads durch ein zylindrisches ringförmiges Teil (88) gebildet wird, das beispielsweise durch Aufpressen am Primärschwungrad angebracht und befestigt ist.

16. Vorrichtung nach einem der Ansprüche 1 bis 14, **dadurch gekennzeichnet, daß** die vorgenannte Einspannscheibe durch schräge Ansätze (102) eines radialen Schenkels (100) eines zylindrischen ringförmigen Teils (98) gebildet wird, das beispielsweise durch elastisches Einrasten an der zylindrischen Nabe (20) des Primärschwungrads angebracht und befestigt ist.

17. Vorrichtung nach einem der Ansprüche 13 bis 16, **dadurch gekennzeichnet, daß** das Gleitlager aus zwei Ringen (86) mit L-förmigem Querschnitt besteht, die gegenüberliegend beiderseits des Sekundärschwungrads angeordnet sind.

18. Vorrichtung nach einem der Ansprüche 13 bis 16, **dadurch gekennzeichnet, daß** der zylindrische Mittelteil (81) und die radialen Schenkel (82, 94) des Gleitlagers verschiedene, nebeneinander angeordnete Teile sind.

19. Vorrichtung nach einem der Ansprüche 1 bis 11, **dadurch gekennzeichnet, daß** das Lager ein Kugellager (110) ist, von dem ein Käfig (112) drehfest mit dem Primärschwungrad verbunden ist, während sein anderer Käfig drehfest mit dem Sekundärschwungrad verbunden ist, wobei die vorgenannte Reibscheibe (60) an einen dieser Käfige angedrückt wird.

20. Vorrichtung nach einem der Ansprüche 1 bis 12, **dadurch gekennzeichnet, daß** die Reibscheibe (60) an eine radiale Fläche des Sekundärschwungrads (16) angedrückt wird.

21. Vorrichtung nach einem der Ansprüche 1 bis 5, **dadurch gekennzeichnet, daß** die Einspannscheibe (62) an eine radiale Fläche des Sekundärschwungrads (16) angedrückt wird und die vorgenannte Reibscheibe bildet.
